# EUROPEAN PATENT SPECIFICATION

(11) **EP 2 800 782 B1**
(45) Date of publication and mention of the grant of the patent: **22.02.2017**
(21) Application number: 12806351.8
(22) Date of filing: 19.12.2012
(51) Int. Cl.: B65D 1/34, C08J 5/18, C08J 9/00, C08L 25/06, C08J 3/22, C08K 5/42, C08L 71/02

(54) **USE OF A COMPOSITION FOR ENHANCING THE HYDROPHILICITY OF SOLID NON-FOAMED OR FOAMED POLYSTYRENE ARTICLES**
VERWENDUNG EINER ZUSAMMENSETZUNG ZUR VERBESSERUNG DER HYDROPHILIE VON FESTEN, NICHT GESCHÄUMTEN ODER GESCHÄUMTEN POLYSTYROLARTIKELN
UTILISATION D'UNE COMPOSITION POUR AUGMENTER L'HYDROPHILIE DES ARTICLES SOLIDES EN POLYSTYRÈNE EXPANSÉS OU NON-EXPANSÉS

(30) Priority: 07.01.2012 EP 12000068
(43) Date of publication of application: 12.11.2014
(73) Proprietor: Clariant International Ltd, 4132 Muttenz (CH)
(72) Inventor: KOLDITZ, Pirko, 22145 Hamburg (DE)
(74) Representative: Mikulecky, Klaus
(86) International application number: PCT/EP2012/005264
(87) International publication number: WO 2013/102479

(56) References cited:
- EP-A1- 0 659 826
- WO-A1-01/05905
- DD-A1- 109 395
- US-A1- 2007 042 183
- DATABASE CA [Online] CHEMICAL ABSTRACTS SERVICE, COLUMBUS, OHIO, US; YABUTA, HISASHI ET AL: "Resin compositions with good mechanical strength and permanent antistatic property for moldings for packaging materials", XP002677307, retrieved from STN Database accession no. 2011:1000431 -& JP 2011 153302 A (SANYO CHEMICAL INDUSTRIES, LTD., JAPAN) 11 August 2011 (2011-08-11)

## Description

The invention relates to the use of two components in the joint extrusion with polystyrene in order to increase the hydrophilic properties of a processed solid non-foamed or foamed polystyrene film, sheet or food tray. The first component being an alkyl sulfonate, alkylbenzene sulfonate or olefin sulfonate, the second component is a polyethylene glycol, the two components can also be used in form of a composition, the composition being in the form of a masterbatch or of a Compound.

Solid non-foamed or foamed polystyrene is widely used as suitable material for making trays for packaging food, such as meat, fish or fruits. These foods being packed in trays usually release water, juice or blood which fills the inside of the packaged tray. From hygienically and visual standpoint it is highly desirable to rapidly absorb these liquids, preferably by a tray material having suitable adsorptive properties.

In the plastics industry it is customary to use additives in the form of Compounds or masterbatches.

For the purposes of the invention, masterbatches are compositions comprising a polymer and the additive, in which the additive is present in higher concentrations than in the final application and the carrier polymer may or may not be the polymer of the final application. Preferred concentrations of the additives in a masterbatch range of from 0.1 to 90 % by weight, in particular of from 1 to 80 % by weight, especially of from 10 to 75 % by weight, based on the total weight of the masterbatch.

For the purposes of the invention, Compounds are compositions comprising a polymer and the additive, in which the additive is present in the desired final concentration of the final application or final article and the polymer is the desired polymer of the final application or final article, so that the Compound is merely brought to the desired shape of the final application or final article by means of a physical shaping process.

Masterbatches and/or Compounds which contain hydrophilic additives and are used for producing hydrophilic compositions or articles have to satisfy demanding requirements: the compositions should have a high loading, i.e. a high concentration of the hydrophilic additives, and it should be possible to set the desired contact angle between the polymer surface and water in the final article. Further requirements are good miscibility and compatibility with the polymer of the final application or the final article. Additionally, a high absorption of water or meat juice in foamed polystyrene food trays is wanted. A measurable variable for the absorptive properties of a polystyrene surface for aqueous liquids is the surface angle (static contact angle) of the polystyrene surface to water. The lower the surface angle, the higher is the absorptive property.

EP 2 289 994 A2 discloses an absorbent masterbatch chip composition for a polystyrene foam tray, wherein the masterbatch chips comprise an organic anionic sulphonate, calcium carbonate and talc.

JP 2011 153302 A discloses resin compositions comprising antistatic agents and thermoplastic resins. The antistatic agents comprise block polymers having hydrophilic polymer blocks and hydrophobic polymer blocks and linkages chosen from ester, amide, ether, urethane, urea and amide bonds. An example for said antistatic agent is a maleated ethylenepropylene copolymer reacted with 12-aminododecanoic acid polymerized with PEG (polyethylene glycol).

0 659 826 A1, DD 109 395 A1 and WO 01/05905 A1 disclose antistatic resin compositions comprising polyethylene oxide, alkyl (aryl) sulfonates or alkyl sulfates and styrene copolymers.

US 2007/042183 A1 discloses a carrier for aqueous media made of porous hydrophobic polymer particles and hydrophilised over at least part of its entire surface with a surfactant. US 2007/042183 A1 does not mention polyethylene glycol.

The known compositions, however, do not satisfy all present-day requirements of industry, especially their absorptive properties are not sufficient. There is a need for masterbatches and Compounds containing hydrophilic additives which provide for a low static contact angle and are still compatible with the polymeric material with respect to formability and mechanical stability, e.g. density, stiffness and tear strength.

It was found that the following composition Z comprising a polystyrene and a particular mixture of hydrophilic additives surprisingly displays improved properties as to the before described demands.

Subject of the invention is the use of a composition Z comprising a component A, a component B and a component P for enhancing the hydrophilicity of solid non-foamed or foamed polystyrene to obtain a hydrophilic solid non-foamed or foamed polystyrene having a static contact angle with water of from 5° to 84°, wherein the component A is an alkyl sulfonate, alkylbenzene sulfonate and/or olefin sulfonate, the component B is a polyethylene glycol, and the component P is a polystyrene and/or an alloy thereof.

According to the present invention, enhancing the hydrophilicity of polystyrene means to provide for a polystyrene material which is modified by particular additives as per the invention in order to obtain a lower static contact angle between the polymer surface and water, and also providing for a higher water absorbing capacity of the additivated polystyrene material compared to the genuine polystyrene material.

Another subject of the invention is the use of a composition Z, as described before, for manufacturing an absorbent article of solid non-foamed or foamed polystyrene, wherein the absorbed material is an aqueous liquid.

The composition Z is preferably a masterbatch MB or a Compound as defined before.

The absorbent article is preferably a film, a sheet or a container, e.g. a food tray, which is preferably in contact with water-containing food, e.g. meat, fish, vegetables or fruits.

The absorbed material is preferably water, blood or juice.

A further subject of the invention is a solid foamed or non-foamed polystyrene article comprising a composition Z as defined above, which article is in contact with water-containing food , e.g. meat, fish, vegetables or fruits, and which article is preferably a film, a sheet or a container, e.g. a food tray.

For the purposes of the invention, a hydrophilic solid non-foamed or foamed polystyrene is characterized by a static contact angle with water of from 5° to 84°, preferably of from 30° to 83° in particular of from 40° to 82°, most preferably from 50 to 81°.

A further subject of the invention is a process for enhancing the hydrophilicity of solid non-foamed or foamed polystyrene by extruding, kneading, pressing or injection-molding a mixture of components A, B and P, as defined before.

Preferably, component A comprises 1, 2, 3, or 4, more preferably 1 or 2, even more preferably 1, alkyl sulfonates, alkylbenzene sulfonates or olefin sulfonates.

Preferred alkyl sulfonates are ammonium or alkali metal alkyl sulfonates, more preferably alkali metal C₆-C₂₂-alkyl sulfonates, especially alkali metal C₁₀-C₁₈-alkyl sulfonates, most preferred alkali metal C₁₂-C₁₈-alkyl sulfonates. Alkali metals are preferably lithium, sodium or potassium, most preferred sodium. Ammonium is NH₄⁺ or a mono-, di-, tri- or tetraalkylated ammonium, wherein the alkyl groups are preferably C₁-C₄-alkyl groups which are optionally substituted with hydroxyl.
The alkyl groups can be linear or branched, e.g. linear or secondary alkyl sulfonates.
Examples of alkyl sulfonates are sodium hexyl sulfonate, sodium octylsulfonate, sodium decylsulfonate, sodium dodecylsulfonate, sodium tetradecylsulfonate, sodium hexadecylsulfonate, sodium octadecylsulfonate, sodium eicosylsulfonate, sodium docosylsulfonate, lithium tetradecylsulfonate, lithium hexadecylsulfonate, lithium octadecylsulfonate, potassium eicosylsulfonate, and potassium docosylsulfonate.
Preferred alkylbenzene sulfonates are sodium or potassium dodecylbenzene sulfonate.
Preferred olefin sulfonates are alpha-olefin sulfonates, especially having 12 to 18 carbon atoms.

Preferably, component B comprises 1, 2, 3, or 4, more preferably 1 or 2, even more preferably 1, polyethylene glycols.

Preferred polyethylene glycols are polyethylene glycols with a molar mass distribution Mₙ of from 100 g/mol to 8,000,000 g/mol, preferably of from 150 g/mol to 1,000,000 g/mol, more preferably of from 160 g/mol to 100,000 g/mol, especially of from 180 g/mol to 35,000 g/mol, more especially of from 200 g/mol to 20,000 g/mol.

Preferred polyethylene glycols are polyethylene glycols with a pH value of from 5 to 7.
Preferred polyethylene glycols are polyethylene glycols with a viscosity at 20 °C (50 % in aqueous solution) of from 50 to 14,000 mPa*s, polyethylene glycols with a viscosity at 20 °C (1 % in aqueous solution) of from 4000 to 15,000 mPa*s, polyethylene glycols with a viscosity at 20 °C (2 % in aqueous solution) of from 400 to 800 mPa*s and polyethylene glycols with a viscosity at 20 °C (5 % in aqueous solution) of from 30 to 50 mPa*s.

Preferred polyethylene glycols are polyethylene glycols with a hydroxyl value of from 1 to 800 mg KOH/g, more preferably of from 3 to 700 mg KOH/g, even more preferably of from 4 to 650 mg KOH/g, especially of from 5 to 620 mg KOH/g, especially of from 30 to 610 mg KOH/g, or especially of from 530 to 600 mg KOH/g.

Preferred polyethylene glycols are linear polyethylene glycols with two free hydroxyl end groups.

Preferably, component P comprises 1, 2, 3, or 4, more preferably 1 or 2, even more preferably 1, polystyrenes.

Polystyrene can be a styrene homopolymer, an alkylstyrene homopolymer, preferably a C₁-C₄-alkylstyrene homopolymer, for example α-methylstyrene homopolymer; a styrene copolymer, especially a high impact polystyrene (HIPS). High impact polystyrenes (HIPS) are generally prepared by polymerization by grafting mixtures of styrene and optionally of one or more copolymerizable vinyl monomers, preferably mixtures of styrene, methylstyrene, ethylstyrene, butylstyrene, halostyrenes, vinylalkylbenzenes, such as vinyltoluene, vinylxylene, acrylonitrile, methacrylonitrile, lower alkyl esters of methacrylic acid, in the presence of a rubbery polymer trunk comprising copolymers chosen from polybutadiene, polyisoprene, rubbery styrene-diene copolymers, acrylic rubber, nitrile rubber and olefinic rubbers, such as propylene diene monomer rubber (PDM) and propylene rubber (PR). In the high impact polystyrene, the rubbery polymer trunk normally constitutes from 5 to 80 % by weight, preferably 5 to 50 % by weight, of the total weight of the grafted polymer.

In addition, it is also possible to use styrene-butadiene-styrene (SBS) copolymers and synthetic butyl rubbers (SBR).

It is also possible to use mixtures or alloys of the above styrene polymers.

The preferred density of component P is of from 1.0 to 1.1 g/cm³, more preferably of from 1.02 to 1.06 g/cm³, even more preferably of from 1.03 to 1.05 g/cm³.

Preferred polystyrenes are polystyrenes with a MFR at 200°C/5kg according to ISO 1133 of from 0.1 to 300 g/cm³, more preferably of from 1 to 200 g/cm³, even more preferably of from 5 to 100 g/cm³, especially of from 10 to 50 g/cm³, more especially of from 15 to 35 g/cm³, in particular of from 20 to 25 g/cm³.

The composition Z expediently comprises of from 0.06 to 90 % by weight of the sum of the components A and B, preferably Z comprises of from 0.5 to 80 % by weight of the sum of the components A and B, more preferably Z comprises of from 1.0 to 70 % by weight of the sum of the components A and B, even more preferably Z comprises of from 1.25 to 50 % by weight of the sum of the components A and B, especially Z comprises of from 1.5 to 25 % by weight of the sum of the components A and B, with the % by weight being based on the total weight of the composition Z.

The composition Z preferably comprises the component A and component B with a weight ratio of component A to component B of from 0.1 to 10.0, preferably of from 0.2 to 5.0, more preferably of from 0.3 to 1.0, even more preferably of from 0.4 to 0.8, especially of from 0.5 to 0.6.

The composition Z expediently comprises

| | | |
|---|---|---|
| 0.2 | to 30 | % by weight of component A, |
| 0.4 | to 60 | % by weight of component B, |
| 10 | to 99.4 | % by weight of component P, |

with the weight % being based on the total weight of composition Z.

If the composition Z is a masterbatch MB, Z expediently comprises

| | | |
|---|---|---|
| 1.5 | to 30 | % by weight of component A, |
| 3 | to 60 | % by weight of component B, |
| 10 | to 95.5 | % by weight of component P; |

preferably, the composition Z as a Masterbatch MB comprises

| | | |
|---|---|---|
| 3 | to 25 | % by weight of component A, |
| 6 | to 50 | % by weight of component B, |
| 25 | to 91 | % by weight of component P; |

more preferably, the composition Z as a Masterbatch comprises

| | | |
|---|---|---|
| 6 | to 20 | % by weight of component A, |
| 12 | to 40 | % by weight of component B, |
| 40 | to 82 | % by weight of component P; |

even more preferably, the composition Z as a Masterbatch MB comprises

| | | |
|---|---|---|
| 12 | to 18.3 | % by weight of component A, |
| 24 | to 36.7 | % by weight of component B, |
| 45 | to 64 | % by weight of component P; |

especially, the composition Z as a Masterbatch MB comprises

| | | |
|---|---|---|
| 15 | to 16.7 | % by weight of component A, |
| 30 | to 33.3 | % by weight of component B, |
| 50 | to 55 | % by weight of component P; |

with the % by weight in each case being based on the total weight of the composition Z.

If the composition Z is a Compound, Z expediently comprises

| | | |
|---|---|---|
| 0.0167 | to 1.47 | % by weight of component A, |
| 0.0333 | to 2.93 | % by weight of component B, |
| 95.6 | to 99.95 | % by weight of component P; |

preferably, the composition Z as a Compound comprises

| | | |
|---|---|---|
| 0.07 | to 1 | % by weight of component A, |
| 0.14 | to 2 | % by weight of component B, |
| 97 | to 99.79 | % by weight of component P; |

more preferably, the composition Z as a Compound AC comprises

| | | |
|---|---|---|
| 0.25 | to 0.75 | % by weight of component A, |
| 0.5 | to 1.5 | % by weight of component B, |
| 97.75 | to 99.25 | % by weight of component P; |

even more preferably, the composition Z as a Compound AC comprises

| | | |
|---|---|---|
| 0.3 | to 0.7 | % by weight of component A, |
| 0.6 | to 1.4 | % by weight of component B, |
| 97.9 | to 99.1 | % by weight of component P; |

especially, the composition Z as a Compound comprises

| | | |
|---|---|---|
| 0.4 | to 0.5 | % by weight of component A, |
| 0.8 | to 1.0 | % by weight of component B, |
| 98.5 | to 98.8 | % by weight of component P; |

the % by weight being in each case based on the total weight of the composition Z.

The composition Z can contain further substances, preferably
- colorants, with organic and inorganic dyes and pigments being possible as colorants; as organic pigments, preference is given to using azo or diazo pigments, coated azo or diazo pigments or polycyclic pigments; preferred polycyclic pigments are diketopyrrolopyrrole, phthalocyanine, quinacridone, perylene, dioxazine, anthraquinone, thioindigo, diaryl or quinophthalone pigments; as inorganic pigments, preference is given to using metal oxides, mixed oxides, aluminium sulphates, chromates, metal powders, pearl-effect pigments (mica), luminous pigments, titanium oxides, cadmium-lead pigments, iron oxides, carbon black, silicates, nickel titanates, cobalt pigments or chromium oxides suitable for pigmentation;
- dispersing aids, preferred dispersants are polar acid esters of C₁₀-C₃₀ alcohols;
- fillers such as silica, zeolites, silicates such as aluminium silicates, sodium silicate, calcium silicates, chalk, talc;
- auxiliaries, preferably metal soaps, foaming agents, nucleating agents, peroxides;
- alkylamines, ethoxylated alkylamines, glyceryl esters or mixtures (blends) thereof;
- UV absorbers and hindered amine light stabilizer (HALS) compounds, slip agents, antifogging agents, anticondensation agents and/or suspension stabilizers, flame retardants; antioxidants or other customary plastics additives; ionic liquids;
or mixtures of these.

These further substances are expediently present from 0 to 60 %, preferably 0.01 to 40 %, more preferably 0.1 to 30 %, even more preferably 1 to 20 %, especially 2 to 10 % by weight, based on the weight of the composition Z. In the case that the polystyrene is a foamed polystyrene, a preferred further substance is a nucleating agent, such as talc, and/or a chemical foaming agent.

The composition Z can be produced by physically mixing the components A, B and P and optionally any of the further substances with one another.
The mixing of the components can occur in one step or in a plurality of steps.
As mixing apparatuses for physical mixing, it is possible to use the mixing apparatuses customary in the plastics industry, preferably an apparatus selected from the group consisting of extruders, kneaders, presses, injection-moulding machines and blade mixers. When the composition Z is a masterbatch MB, the mixing apparatuses are preferably extruders, kneaders and/or blade mixers. When the composition Z is a Compound, the mixing apparatuses are preferably extruders, presses and injection-moulding machines, particularly preferably extruders.

Mixing preferably occurs continuously or batchwise, particularly preferably continuously, in the case of a masterbatch MB preferably by extrusion or kneading, particularly preferably by extrusion, and in the case of a compound preferably by extrusion or injection moulding or pressing, particularly preferably by extrusion.
Mixing is preferably carried out at a temperature of from 80 to 260 °C, more preferably of from 120 to 250 °C, even more preferably of from 150 to 230 °C, especially of from 180 to 220 °C.
The mixing time is preferably of from 5 sec to 10 h.
The mixing time in the case of continuous mixing is preferably of from 5 sec to 1 h, more preferably of from 10 sec to 15 min.

The mixing time in the case of batchwise mixing is preferably of from 1 min to 10 h, more preferably of from 2 min to 8 h, in particular of from 2 min to 5 h, especially of from 2 min to 1 h, particularly preferably of from 2 to 15 min.

In the case of Compounds, the components A, B and P are preferably mixed in the form of a masterbatch MB with polystyrene P. Furthermore, a premix of the masterbatch MB with pelletized polystyrene is preferably used for physical mixing.

The compositions Z, both in the form of a masterbatch MB or in the form of a compound , are surprisingly characterized by a low static contact angle.

For the production of foamed polystyrene articles, e.g. food trays, polystyrene is extruded with foaming agents and preferably in the presence of nucleating agents, e.g. talc or chemical foaming agents. The foaming agents can be either a physical foaming agent, e.g. a gas like CO₂, N₂, isopentane, hydrofluorocarbons, or a chemical foaming agent which decomposes in the melted polymer during processing liberating a gas, e.g. CO₂ or N₂. In both processes the gas has to be thoroughly dispersed and dissolved in the polymer melt under pressure in the extruder barrel. When the melt exits the extruder through the die, the pressure drops and the gas expands the melt creating a cellular structure in the polymer.

Foam extruded polystyrene articles produced in the so called direct gassed extrusion can achieve foam densities of from 15 kg/m³ to 500 kg/m³.

### Test methods:

Determination of the molar mass distribution Mₙ is done by gel permeation chromatography (GPC) according to DIN 55672.
Determination of the viscosity at 20 °C of a 1 %, 2 %, 5 % or 50 % aqueous solution in accordance with ISO 6388.
Determination of the density in accordance with ISO 1183 .
Determination of the MFR at 200 °C and 5 kg weight in accordance with ISO 1133.
Determination of the tensile modulus in accordance with ISO 527-1/-2.

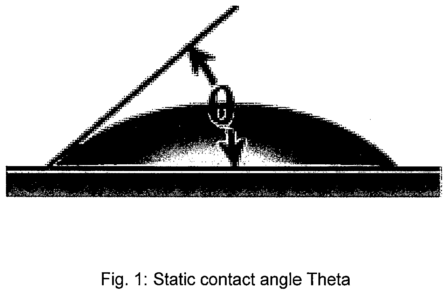

Determination of the static contact angle is carried out by carefully putting a drop of destilled water with a defined volume on the surface of the polystyrene sheet. The angle formed between the solid/liquid interface and the liquid/vapor interface is referred to as the static contact angle Theta. After 5s of resting time, a photo is taken and the static contact angle is determined with an image processing software by looking at the profile of the drop and measuring two-dimensionally the angle formed between the solid and the drop profile with the vertex at the three-phase line as shown in the graphic (Fig. 1).

Substances used:
- Component A:: sodium C₁₂-C₁₈-alkyl sulphonate;
- Component B1:: Polyethylene glycol, with a hydroxyl value of from 28 to 39 mg KOH/g, and an average molecular weight of 3,350 g/mol;
- Component B2:: Polyethylene glycol, with a hydroxyl value of 530 to 600 mg KOH/g, and an average molecular weight of 200 g/mol;
- Component D1:: micronized calcium carbonate, with a statistic mean diameter of 5.5 µm;
- Component D2:: talc, mg-silicate, CAS 14807-96-6 with a statistic mean diameter of 6 µm;
- Component P1:: general purpose polystyrene homopolymer having an MFR at 200 °C / 5 kg of from 20 to 28 g/10 min and a tensile modulus of from 3000 to 3400 MPa.
- Component P2:: high impact, rubber modified polystyrene having an MFR at 200 °C / 5 kg of from 4.0 to 6.0 g/10 min and a tensile modulus of from 1600 to 2000 MPa.

In the following examples percentages are weight percent based on the total weight of the mixture or the article, unless indicated otherwise; parts are parts by weight; "Comp." means Comparative Example.

### Comparative Example 1

15 parts of component B1 and 85 parts of component P1 are homogenized together on a twin-screw extruder (temperature of the extruder: 220 to 230 °C). A masterbatch MB1 is obtained.

### Comparative Example 2

15 parts of component A and 85 parts of component P1 are homogenized together on a twin-screw extruder (temperature of the extruder: 220 to 230 °C). A masterbatch MB2 is obtained.

### Example 3

5 parts of component A, 10 parts of component B1 and 85 parts of component P1 are homogenized together on a twin-screw extruder (temperature of the extruder: 220 to 230 °C). A masterbatch MB3 is obtained.

### Example 4

5 parts of component A, 10 parts of component B2 and 85 parts of component P1 are homogenized together on a twin-screw extruder (temperature of the extruder: 220 to 230 °C). A masterbatch MB4 is obtained.

### Example 5

12.5 parts of component A, 2.5 parts of component B1, and 85 parts of component P1 are homogenized together on a twin-screw extruder (temperature of the extruder: 220 to 230 °C). A masterbatch MB5 is obtained.

### Example 6

2.5 parts of component A, 12.5 parts of component B1, and 85 parts of component P1 are homogenized together on a twin-screw extruder (temperature of the extruder: 220 to 230 °C). A masterbatch MB6 is obtained.

### Comparison Example 7 (representing the teaching of EP 2 289 994 A2)

15 parts of component A, 15 parts of component D1, 7.5 parts of component D2 and 62.5 parts of component P1 are homogenized together on a twin-screw extruder (temperature of the extruder: 220 to 230 °C). A masterbatch MB7 is obtained.

### Comparison Example 8 (representing the teaching of EP 2 289 994 A2)

21 parts of component A, 20 parts of component D1, 5.0 parts of component D2 and 54 parts of component P1 are homogenized together on a twin-screw extruder (temperature of the extruder: 220 to 230 °C). A masterbatch MB8 is obtained.

### Example 9

5 parts of component A, 10 parts of component B1, 45 parts of component P1 and and 40 parts of component P2 are homogenized together on a twin-screw extruder (temperature of the extruder: 220 to 230 °C). A masterbatch MB9 is obtained.

**Table 1**

| Example | Masterbatch | Component [% by weight] | | | | | | | Additive A+B [% by weight] |
|---|---|---|---|---|---|---|---|---|---|
| | Designation | A | B1 | B2 | D1 | D2 | P1 | P2 | |
| Comp. 1 | MB1 | 0 | 15 | 0 | 0 | 0 | 85 | 0 | 15 |
| Comp. 2 | MB2 | 15 | 0 | 0 | 0 | 0 | 85 | 0 | 15 |
| 3 | MB3 | 5 | 10 | 0 | 0 | 0 | 85 | 0 | 15 |
| 4 | MB4 | 5 | 0 | 10 | 0 | 0 | 85 | 0 | 15 |
| 5 | MB5 | 12.5 | 2.5 | 0 | 0 | 0 | 85 | 0 | 15 |
| 6 | MB6 | 2.5 | 12.5 | 0 | 0 | 0 | 85 | 0 | 15 |
| Comp. 7 | MB7 | 15 | 0 | 0 | 15 | 7.5 | 62.5 | 0 | 15 |
| Comp. 8 | MB8 | 21 | 0 | 0 | 20 | 5 | 54 | 0 | 21 |
| 9 | MB9 | 5 | 10 | 0 | 0 | 0 | 45 | 40 | 15 |

### Comparison Example 21

10 parts of a masterbatch MB1 produced as described in Comparison Example 1 were homogenized and mixed with 90 parts of component P1 on a flat film extruder (Collin). With a rotational speed of 100 rpm and a temperature of 220 - 230 °C a flat film FF21 with a thickness of 100 µm was obtained.

### Comparison Example 22

10 parts of a masterbatch MB2 produced as described in Comparison Example 2 were homogenized and mixed with 90 parts of component P1 on a flat film extruder (Collin). With a rotational speed of 100 rpm and a temperature of 220 - 230 °C a flat film FF22 with a thickness of 100 µm was obtained.

### Example 23

10 parts of a masterbatch MB3 produced as described in Example 3 were homogenized and mixed with 90 parts of component P1 on a flat film extruder (Collin). With a rotational speed of 100 rpm and a temperature of 220 - 230 °C a flat film FF23 with a thickness of 100 µm was obtained.

### Example 24

10 parts of a masterbatch MB4 produced as described in Example 4 were homogenized and mixed with 90 parts of component P1 on a flat film extruder (Collin). With a rotational speed of 100 rpm and a temperature of 220 - 230 °C a flat film FF24 with a thickness of 100 µm was obtained.

### Example 25

10 parts of a masterbatch MB5 produced as described in Example 5 were homogenized and mixed with 90 parts of component P1 on a flat film extruder (Collin). With a rotational speed of 100 rpm and a temperature of 220 - 230 °C a flat film FF25 with a thickness of 100 µm was obtained.

### Example 26

10 parts of a masterbatch MB6 produced as described in Example 6 were homogenized and mixed with 90 parts of component P1 on a flat film extruder (Collin). With a rotational speed of 100 rpm and a temperature of 220 - 230 °C a flat film FF26 with a thickness of 100 µm was obtained.

### Comparison Example 27

10 parts of a masterbatch MB7 produced as described in Comparison Example 7 were homogenized and mixed with 90 parts of component P1 on a flat film extruder (Collin). With a rotational speed of 100 rpm and a temperature of 220 - 230 °C a flat film FF27 with a thickness of 100 µm was obtained.

### Comparison Example 28

7.14 parts of a masterbatch MB8 produced as described in Comparison Example 8 were homogenized and mixed with 92.86 parts of component P1 on a flat film extruder (Collin). With a rotational speed of 100 rpm and a temperature of 220 - 230 °C a flat film FF27 with a thickness of 100 µm was obtained.

### Example 29

10 parts of a masterbatch MB9 produced as described in Example 9 were homogenized and mixed with 50 parts of component P1 and 40 parts of component P2 on a flat film extruder (Collin). With a rotational speed of 100 rpm and a temperature of 220 - 230 °C a flat film FF29 with a thickness of 100 µm was obtained.

**Table 2**

| Example | Flat Film Designation | Additive loading A+B [% by weight] | static contact angle [°] |
|---|---|---|---|
| Comp. 21 | FF21 | 1.5 | 90 |
| Comp. 22 | FF22 | 1.5 | 85 |
| 23 | FF23 | 1.5 | 79 |
| 24 | FF24 | 1.5 | 77 |
| 25 | FF25 | 1.5 | 81 |
| 26 | FF26 | 1.5 | 83 |
| Comp.27 | FF27 | 1.5 | 89 |
| Comp.28 | FF28 | 1.5 | 89 |
| 29 | FF29 | 1.5 | 79 |

## Claims

1. Use of a composition Z comprising a component A, a component B and a component P for enhancing the hydrophilicity of solid non-foamed or foamed polystyrene to obtain a hydrophilic solid foamed or non-foamed polystyrene having a static contact angle with water of from 5 ° to 84 °, measured as disclosed in the test methods of the specification, wherein
the component A is an alkyl sulfonate, alkylbenzene sulfonate and/or olefin sulfonate,
the component B is a polyethylene glycol, and
the component P is a polystyrene and/or an alloy thereof.

2. The use as claimed in claim 1, wherein the composition Z is a masterbatch MB or a Compound.

3. The use as claimed in claim 1 or 2, wherein the composition Z comprises of from 0.06 to 90 % by weight of the sum of the components A and B.

4. The use as claimed in any of claims 1 to 3, wherein the composition Z comprises the component A and component B with a weight ratio of component A to component B of from 0.1 to 10.0.

5. The use as claimed in any of claims 1 to 4, wherein the composition Z comprises
| | | |
|---|---|---|
| 0.2 | to 30 | % by weight of component A, |
| 0.4 | to 60 | % by weight of component B, |
| 10 | to 99.4 | % by weight of component P, |
with the weight % being based on the total weight of composition Z.

6. The use as claimed in any of claims 1 to 4, wherein the composition Z is a Compound and comprises
| | | |
|---|---|---|
| 0.0167 | to 1.47 % | by weight of component A, |
| 0.0333 | to 2.93 % | by weight of component B; |
| 95.6 | to 99.95 % | by weight of component P; |
with the weight % being based on the total weight of composition Z.

7. The use as claimed in any of claims 1 to 5, wherein the composition Z is a masterbatch MB and comprises
| | | |
|---|---|---|
| 1.5 | to 30 | % by weight of component A, |
| 3 | to 60 | % by weight of component B; |
| 10 | to 95.5 | % by weight of component P; |
with the weight % being based on the total weight of composition Z.

8. The use as claimed in any of claims 1 to 7, wherein component A is an alkali metal C₁₂-C₁₈-alkyl sulfonate.

9. The use as claimed in any of claims 1 to 8, wherein component P is a styrene homopolymer, an alkylstyrene homopolymer or a styrene copolymer.

## Patentansprüche

1. Verwendung einer Zusammensetzung Z, umfassend eine Komponente A, eine Komponente B und eine Komponente P zur Erhöhung der Hydrophilie von festem, gegebenenfalls verschäumtem Polystyrol zum Erhalt eines hydrophilen, festen, gegebenenfalls verschäumten Polystyrols mit einem statischen Kontaktwinkel mit Wasser von 5° bis 84°, gemessen wie in den Testmethoden der Patentschrift offenbart, wobei
es sich bei der Komponente A um ein Alkylsulfonat, Alkylbenzolsulfonat und/oder Olefinsulfonat handelt,
es sich bei der Komponente B um ein Polyethylenglykol handelt und
es sich bei der Komponente P um ein Polystyrol und/oder eine Legierung davon handelt.

2. Verwendung nach Anspruch 1, wobei die Zusammensetzung Z ein Masterbatch MB oder ein Compound ist.

3. Verwendung nach Anspruch 1 oder 2, wobei die Zusammensetzung Z 0,06 bis 90 Gew.-% der Summe der Komponenten A und B umfasst.

4. Verwendung nach einem der Ansprüche 1 bis 3, wobei die Zusammensetzung Z die Komponente A und die Komponente B mit einem Gewichtsverhältnis von Komponente A zu Komponente B von 0,1 bis 10,0 umfasst.

5. Verwendung nach einem der Ansprüche 1 bis 4, wobei die Zusammensetzung Z
0,2 bis 30 Gew.-% Komponente A,
0,4 bis 60 Gew.-% Komponente B,
10 bis 99,4 Gew.-% Komponente P
umfasst, wobei sich die Gew.-%-Angaben auf das Gesamtgewicht der Zusammensetzung Z beziehen.

6. Verwendung nach einem der Ansprüche 1 bis 4, wobei die Zusammensetzung Z ein Compound ist und
0,0167 bis 1,47 Gew.-% Komponente A,
0,0333 bis 2,93 Gew.-% Komponente B,
95,6 bis 99,95 Gew.-% Komponente P
umfasst, wobei sich die Gew.-%-Angaben auf das Gesamtgewicht der Zusammensetzung Z beziehen.

7. Verwendung nach einem der Ansprüche 1 bis 5, wobei die Zusammensetzung Z ein Masterbatch MB ist und
1,5 bis 30 Gew.-% Komponente A,
3 bis 60 Gew.-% Komponente B,
10 bis 95,5 Gew.-% Komponente P
umfasst, wobei sich die Gew.-%-Angaben auf das Gesamtgewicht der Zusammensetzung Z beziehen.

8. Verwendung nach einem der Ansprüche 1 bis 7, bei der es sich bei Komponente A um ein Alkalimetall-C₁₂-C₁₈-alkylsulfonat handelt.

9. Verwendung nach einem der Ansprüche 1 bis 8, wobei es sich bei Komponente P um ein Styrol-Homopolymer, ein Alkylstyrol-Homopolymer oder ein Styrol-Copolymer handelt.

## Revendications

1. Utilisation d'une composition Z comprenant un constituant A, un constituant B et un constituant P pour l'augmentation du caractère hydrophile de polystyrène non expansé ou expansé solide pour obtenir un polystyrène expansé ou non expansé solide hydrophile ayant un angle de contact statique avec l'eau, mesuré comme divulgué dans les méthodes d'essai de la description, de 5° à 84°, dans laquelle
le constituant A est un alkylsulfonate, alkylbenzènesulfonate et/ou oléfinesulfonate,
le constituant B est un polyéthylèneglycol et
le constituant P est un polystyrène et/ou un alliage de celui-ci.

2. Utilisation selon la revendication 1, dans laquelle la composition Z est un mélange maître MB ou un composat.

3. Utilisation selon la revendication 1 ou 2, dans laquelle la composition Z comprend de 0,06 à 90 % en poids de la somme des constituants A et B.

4. Utilisation selon l'une quelconque des revendications 1 à 3, dans laquelle la composition Z comprend le constituant A et le constituant B en un rapport pondéral du constituant A au constituant B de 0,1 à 10,0.

5. Utilisation selon l'une quelconque des revendications 1 à 4, dans laquelle la composition Z comprend
0,2 à 30 % en poids de constituant A,
0,4 à 60 % en poids de constituant B,
10 à 99,4 % en poids de constituant P,
les % en poids étant par rapport au poids total de la composition Z.

6. Utilisation selon l'une quelconque des revendications 1 à 4, dans laquelle la composition Z est un composat et comprend
0,0167 à 1,47 % en poids de constituant A,
0,0333 à 2,93 % en poids de constituant B ;
95,6 à 99,95 % en poids de constituant P ;
les % en poids étant par rapport au poids total de la composition Z.

7. Utilisation selon l'une quelconque des revendications 1 à 5, dans laquelle la composition Z est un mélange maître MB et comprend
1,5 à 30 % en poids de constituant A,
3 à 60 % en poids de constituant B ;
10 à 95,5 % en poids de constituant P ;
les % en poids étant par rapport au poids total de la composition Z.

8. Utilisation selon l'une quelconque des revendications 1 à 7, dans laquelle le constituant A est un (alkyl en C₁₂-C₁₈) sulfonate de métal alcalin.

9. Utilisation selon l'une quelconque des revendications 1 à 8, dans laquelle le constituant P est un homopolymère de styrène, un homopolymère d'alkylstyrène ou un copolymère de styrène.
